(19) Europäisches Patentamt
European Patent Office
Office européen des brevets

(11) Veröffentlichungsnummer: **0 054 682**
**B1**

(12) # EUROPÄISCHE PATENTSCHRIFT

(45) Veröffentlichungstag der Patentschrift: **29.08.84**

(51) Int. Cl.³: **C 07 C 83/06**, A 01 N 35/06

(21) Anmeldenummer: **81108879.8**

(22) Anmeldetag: **24.10.81**

(54) **5-Aryl-cyclohexan-1,3-dion-Derivate, Herbizide, die diese Verbindungen enthalten, und Verfahren zu ihrer Herstellung.**

(30) Priorität: **19.12.80 DE 3047924**

(43) Veröffentlichungstag der Anmeldung: **30.06.82 Patentblatt 82/26**

(45) Bekanntmachung des Hinweises auf die Patenterteilung: **29.08.84 Patentblatt 84/35**

(84) Benannte Vertragsstaaten: **AT BE CH DE FR GB IT LI LU NL SE**

(56) Entgegenhaltungen:
**DE - A - 2 439 104**

**CHEMICAL ABSTRACTS, Band 85, Nr. 1, 5. Juli 1976, Seite 423, Nr. 5281g Columbus, Ohio, U.S.A.**
**CHEMICAL ABSTRACTS, Band 86, Nr. 3, 17. Januar 1977, Seite 397, Nr. 16357h Columbus, Ohio, U.S.A.**

***Die Akte enthält technische Angaben, die nach dem Eingang der Anmeldung eingereicht wurden und die nicht in dieser Patentschrift enthalten sind.***

(73) Patentinhaber: **BASF Aktiengesellschaft, *Carl-Bosch-Strasse 38, D-6700 Ludwigshafen (DE)***

(72) Erfinder: **Jahn, Dieter, Dr., Burgunder Weg 8, D-6803 Neckarhausen (DE)**
Erfinder: **Rohr, Wolfgang, Dr., In der Dreispitz 13, D-6706 Wachenheim (DE)**
Erfinder: **Becker, Rainer, Dr., Sonnenwendstrasse 83, D-6702 Bad Duerkheim (DE)**
Erfinder: **Wuerzer, Bruno, Dr. Dipl.-Landw., Ruedigerstrasse 13, D-6701 Otterstadt (DE)**

**EP 0 054 682 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue 5-Aryl-1,3-cyclohexandion-Derivate sowie Herbizide, welche diese Verbindungen enthalten.

Es ist bekannt, 5-Aryl-cyclohexan-1,3-dion-Derivate zur selektiven Bekämpfung von unerwünschten Gräsern in breitblättrigen Kulturen zu verwenden (DE-AS 2 439 104). Weiterhin ist bekannt, daß speziell die p-Substitution des Phenylringes Verträglichkeit des Wirkstoffs bei der grasartigen Kulturpflanze Weizen bewirkt (Proc. 4th International Congress of Pesticide Chemistry (IUPAC), 1978, S. 235). Die besten Resultate erzielte man hierbei mit dem p-Methyl-Rest, wie er in dem 2-(1-Ethoxyaminopropyliden)-5-(4-methylphenyl)-cyclohexan-1,3-dion vorliegt. Besonders bemerkenswert ist in der oben genannten Veröffentlichung die Feststellung, daß beim Alkoxyaminoalkyliden-Rest der Übergang von Alkoxyaminopropyliden zu Alkoxyaminobutyliden sowohl zu einem Abfall der herbiziden Aktivität wie auch zu einer Verringerung der Verträglichkeit bei Kulturpflanzen führt. Im Versuchsbeispiel mit Weizen als Kulturpflanze sind ausschließlich 5-Arylcyclohexan-1,3-dion-Derivate mit Ethoxyaminopropyliden-Resten als Wirkstoffe aufgeführt, die Weizen wenig schädigen.

Es wurde nun gefunden, daß Verbindungen der allgemeinen Formel

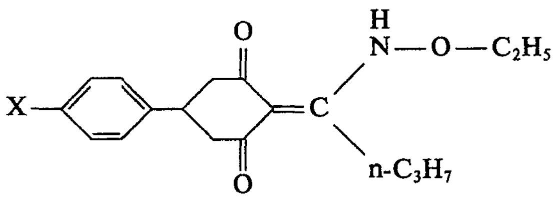

in der X Fluor, Chlor, Ethyl oder n-Propyl bedeutet, und die Salze dieser Verbindungen für den Fall, daß X Ethyl bedeutet, unerwünschte Gräser in Getreide gut bekämpfen und dabei für Weizen und Gerste überraschend besser verträglich sind als der bekannte Wirkstoff, und für den Fall, daß X Fluor oder Chlor bedeutet, ebenfalls noch eine gute herbizide Wirkung gegen Alopecurus myosuroides und andere unerwünschte Gräser bei einem gewissen Nachlassen der Aktivität gegen Avena fatua haben, während ihre Verträglichkeit für Getreide ebenfalls überraschend gut ist.

Die neuen Verbindungen können in mehreren tautomeren Formen vorliegen:

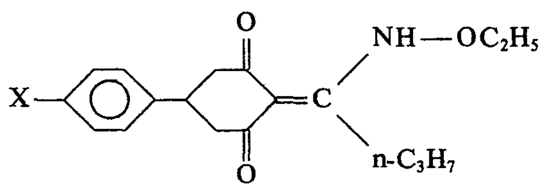

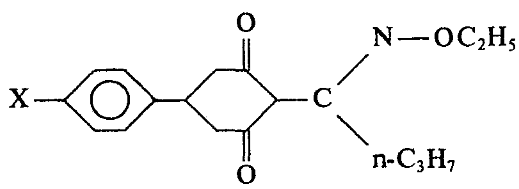

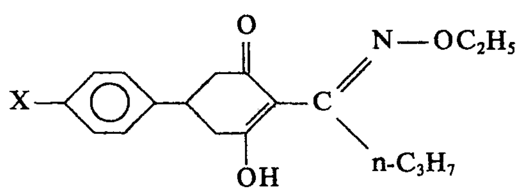

Alle diese Formen werden vom Patentanspruch umfaßt.

Die neuen Verbindungen sind aus den Ketonen der allgemeinen Formel I nach folgender Reaktionsgleichung darstellbar:

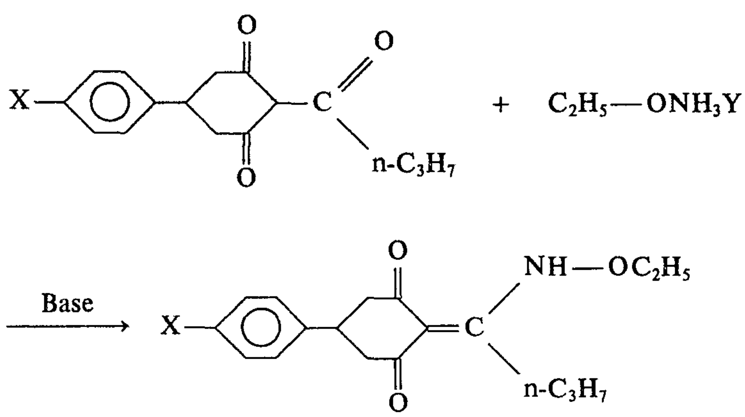


(I)

wobei X die oben genannten Bedeutungen hat und Y ein Anion bedeutet. Anionen sind z. B. die Ionen: Chlorid, Sulfat, Nitrat, Bromid.

Man führt die Reaktion zweckmäßig in heterogener Phase in einem inerten Lösungsmittel bei Temperaturen zwischen 0 und 80°C oder 0° und dem Siedepunkt des Gemisches in Gegenwart einer Base durch. Basen sind beispielsweise Ammoniak, Carbonate, Hydrogencarbonate, Acetate, Alkoholate, Hydroxide oder Oxide von Alkali- oder Erdalkalimetallen, besonders von Natrium und Kalium sowie Magnesium und Kalzium. Daneben können auch organische Basen wie Pyridin oder tertiäre Amine Verwendung finden.

Ein für die Umsetzung besonders geeigneter definierter pH-Bereich reicht von pH 2 bis pH 7, insbesondere von pH 4,5 bis pH 5,5. Die Einstellung des pH-Bereiches für die Umsetzung erfolgt vorteilhaft durch Zusatz von Acetaten, beispielsweise Alkaliacetaten, insbesondere Natrium- oder Kaliumacetat oder ihren Mischungen. Die Alkaliacetate werden beispielsweise angewendet in Mengen von 0,5 bis 2 mol, bezogen auf die Ammoniumverbindung.

Als Lösungsmittel sind geeignet beispielsweise Methanol, Ethanol, Isopropanol, Benzol, Tetrahydrofuran, Chloroform, Acetonitril, Dichlorethan, Essigsäureethylester, Dioxan, Dimethylsulfoxid.

Die Reaktion ist nach einigen Stunden beendet. Das Reaktionsprodukt kann durch Einengen der Mischung, Zugabe von Wasser und Extraktion mit einem unpolaren Lösungsmittel sowie Abdestillieren des Lösungsmittels unter vermindertem Druck isoliert werden.

Darüber hinaus ist die Herstellung der neuen Verbindungen auch durch Umsetzung der Verbindungen I mit Ethoxyamin möglich.

Die Verbindungen der Formel I können durch Acylierung der substituierten Cyclohexan-1,3-dione II

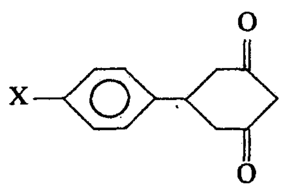

(II)

wie dies beispielsweise in Tetrahedron Letters 29, Seite 2491 beschrieben ist, erhalten werden.

Verbindungen der Formel II können außerdem in folgender tautomeren Form IIa vorliegen

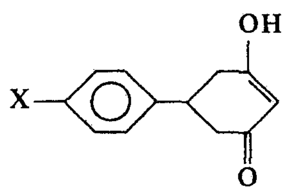

(IIa)

Verbindungen der Formel II können aus den Estern III bzw. deren Salzen durch Kochen mit Alkalilauge und anschließendes Erhitzen in saurem Medium erhalten werden.

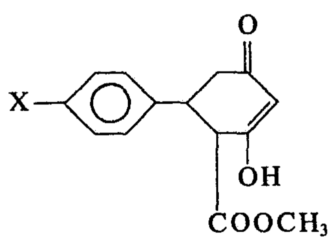

(III)

Verbindungen der Formel III sind aus Benzaldehyden

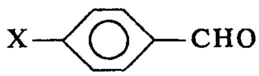

nach literaturbekannten Methoden beispielsweise durch Aldol-Kondensation mit Aceton und anschließender Cyclisierung mit Malonsäureestern analog Organic Synthesis Coll. Vol. II, S. 200, herstellbar. Auch durch Umsetzung des Aldehyds

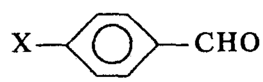

mit Malonsäure nach Knoevenagel-Doebner (s. Org. Reactions Band 15, S. 204), Veresterung der entstehenden Säure sowie Cyclisierung mit Acetessigestern in analoger Weise, wie dies z. B. in

Houben-Weyl, Methoden der Organischen Chemie, Band 8, S. 598, beschrieben ist, gelangt man zu den Verbindungen der Formel III.

Die Salze der Verbindungen sind beispielsweise die Alkalisalze, insbesondere die Kalium- oder Natriumsalze.

Die Natrium- und Kaliumsalze der neuen Verbindungen können durch Behandeln dieser Verbindungen mit Natrium- oder Kaliumhydroxid in wäßriger Lösung oder in einem organischen Lösungsmittel wie Methanol, Ethanol, Aceton erhalten werden.

Auch Natrium- und Kaliumalkoholate können als Basen dienen.

Andere Metallsalze, z. B. die Mangan-, Kupfer-, Zink-, Eisen- und Bariumsalze können aus dem Natriumsalz durch Reaktion mit den entsprechenden Metallchloriden in wäßriger Lösung hergestellt werden.

Die folgenden Beispiele erläutern die Herstellung der neuen Cyclohexan-1,3-dione.

In den Beispielen verhalten sich Gewichtsteile zu Volumenteilen wie Kilogramm zu Liter.

## Beispiel 1

20,1 Gewichtsteile 2-Butyryl-5-(4-fluorphenyl)-cyclohexan-1,3-dion, 7,1 Gewichtsteile Ethoxyammoniumchlorid, 6,6 Gewichtsteile wasserfreies Natriumacetat und 120 Volumenteile Ethanol werden bei Raumtemperatur 16 Stunden gerührt. Dann wird das Lösungsmittel unter vermindertem Druck abdestilliert, der Rückstand mit jeweils 100 Volumenteilen Wasser und Dichlormethan gerührt, die organische Phase abgetrennt und die wäßrige Phase mit 50 Volumenteilen Dichlormethan extrahiert. Die vereinigten organischen Phasen werden mit Wasser gewaschen, über Natriumsulfat getrocknet und im Vakuum eingeengt.

Man erhält 2-(Ethoxyaminobutyliden)-5-(4-fluorphenyl)-cyclohexan-1,3-dion als Feststoff mit folgender Strukturformel: (Wirkstoff Nr. 1)

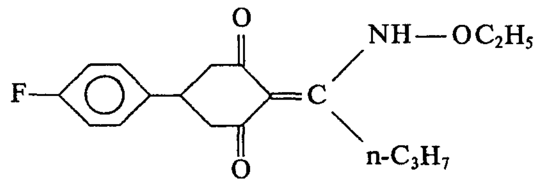

Umkristallisieren aus Cyclohexan ergibt weiße Kristalle mit Schmelzpunkt 58—59° C.

$C_{18}H_{22}NO_3F$ (MG 319)

| | | | |
|---|---|---|---|
| Ber.: | C 67,69 | H 6,94 | N 4,39 |
| Gef.: | C 67,7 | H 6,9 | N 4,3 |

## Beispiel 2

13,5 Gewichtsteile 2-Butyryl-5-(4-chlorphenyl)-cyclohexan-1,3-dion, 4,5 Gewichtsteile Ethoxyammoniumchlorid, 4,5 Gewichtsteile wasserfreies Natriumacetat und 100 Volumenteile Ethanol werden wie in Beispiel 1 umgesetzt und aufgearbeitet. Man erhält 2-(Ethoxyaminobutyliden)-5-(4-chlorphenyl)-cyclohexan-1,3-dion als Feststoff. Er wird aus Cyclohexan umkristallisiert. Schmelzpunkt 77° C (Wirkstoff Nr. 2)

$C_{18}H_{22}NO_3Cl$ (MG 336)

| | | | |
|---|---|---|---|
| Ber.: | C 64,38 | H 6,60 | N 4,17 |
| Gef.: | C 64,1 | H 6,4 | N 3,9 |

## Beispiel 3

28,6 Gewichtsteile 2-Butyryl-5-(4-ethylphenyl)-cyclohexan-1,3-dion werden in 150 Volumenteilen Ethanol mit 6,1 Gewichtsteilen Ethoxyamin bei Raumtemperatur 8 Stunden gerührt. Die Mischung wird im Vakuum eingeengt, der Rückstand in 200 Volumenteilen Dichlormethan aufgenommen, die Lösung mit 5%iger wäßriger Salzsäure und Wasser gewaschen, über Natriumsulfat getrocknet und im Vakuum eingeengt. Man erhält 2-(Ethoxyaminobutyliden)-5-(4-ethylphenyl)-cyclohexan-1,3-dion als Öl. (Wirkstoff Nr. 3) $n_D^{23}$ : 1,5448

$C_{20}H_{27}NO_3$ (329)

| | | | |
|---|---|---|---|
| Ber.: | C 72,92 | H 8,26 | N 4,25 |
| Gef.: | C 72,2 | H 8,2 | N 4,5 |

Beispiel 4

15,0 Gewichtsteile 2-Butyryl-5-(4-n-propylphenyl)-cyclohexan-1,3-dion werden mit 5,1 Gewichtsteilen Ethoxyammoniumchlorid und 4,5 Gewichtsteilen wasserfreiem Natriumacetat in 120 Volumenteilen Ethanol analog Beispiel 1 umgesetzt und aufgearbeitet. Man erhält 2-(Ethoxyaminobutyliden)-5-(4-propylphenyl)-cyclohexan-1,3-dion (Wirkstoff Nr. 4) $n_D^{24}$: 1,5452.

Die Anwendung der Wirkstoffe erfolgt z. B. in Form von direkt versprühbaren Lösungen, Pulvern, Suspensionen — auch hochprozentige wäßrige, ölige oder sonstige Suspensionen — oder Dispersionen, Emulsionen, Öldispersionen, Pasten, Stäubemitteln, Streumitteln, Granulaten durch Versprühen, Vernebeln, Verstäuben, Verstreuen oder Gießen. Die Anwendungsformen richten sich ganz nach den Verwendungszwecken.

Zur Herstellung von direkt versprühbaren Lösungen, Emulsionen, Pasten und Öldispersionen kommen Mineralölfraktionen von mittlerem mit hohem Siedepunkt, wie Kerosin oder Dieselöl, ferner Kohlenteeröle usw. sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, wie z. B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind. An oberflächenaktiven Stoffen sind zu nennen:

Alkali-, Erdalkali-, Ammoniumsalze von Ligninsulfonsäure, Naphthalinsulfonsäuren, Phenolsulfonsäuren, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylen-octylphenolether, ethoxyliertes Isooctylphenol-, Octylphenol-, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel wie z. B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gewichtsprozent Wirkstoff, vorzugsweise zwischen 0,5 und 90 Gewichtsprozent.

Die Wirkstoffe werden angewendet, beispielsweise durch Gießen, Streuen, Stäuben, Spritzen oder Sprühen auf die Pflanzen oder den Boden, durch Injizieren oder Bestreichen von Pflanzen oder durch Einbringen in das Bewässerungswasser.

Beispiel I

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

Beispiel II

10 Gewichtsteile der Verbindung 2 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht. Durch Ausgießen und

feines Verteilen der Lösung in Wasser erhält man eine wäßrige Dispersion.

Beispiel III

20 Gewichtsteile der Verbindung 2 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

Beispiel IV

20 Gewichtsteile der Verbindung 3 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

Beispiel V

80 Gewichtsteile des Wirkstoffs 1 werden mit 3 Gewichtsteilen des Natriumsalzes der Diisobutylnaphtalin-alphasulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen. Durch feines Verteilen der Mischung in Wasser erhält man eine Spritzbrühe.

Beispiel VI

5 Gewichtsteile der Verbindung 1 werden mit 95 Gewichtsteilen feinteiligem Kaolin vermischt. Man erhält auf diese Weise ein Stäubemittel, das 5 Gewichtsprozent des Wirkstoffs enthält.

Beispiel VII

30 Gewichtsprozent der Verbindung 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Beispiel VIII

40 Gewichtsteile des Wirkstoffs 1 werden mit 10 Teilen Natriumsalz eines Phenolsulfonsäure-harnstoff-formaldehyd-kondensats, 2 Teilen Kieselgel und 48 Teilen Wasser innig vermischt. Man erhält eine stabile wäßrige Dispersion. Durch Verdünnen mit Wasser erhält man eine wäßrige Dispersion.

Beispiel IX

20 Teile des Wirkstoffs 1 werden mit 12 Teilen Calciumsalz der Dodecylbenzolsulfonsäure, 8 Teile Fettalkoholpolyglykolether, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

Die Applikation kann im Vorauflaufverfahren oder bei Nachauflaufanwendung erfolgen.

Die Aufwandmengen an Wirkstoff betragen je nach Jahreszeit und Wachstumsstadium 0,1 bis 15 kg/ha und mehr.

Der Einfluß der neuen 5-Aryl-cyclohexan-1,3-dion-Derivate auf das Wachstum von erwünschten und unerwünschten Grasarten wird anhand von Gewächshausversuchen aufgezeigt.

Als Kulturgefäße dienten Plastikblumentöpfe mit 300 $cm^3$ Inhalt und lehmiger Sand mit etwa 1,5% Humus als Substrat. Die Samen der in Tabelle 1 aufgeführten Pflanzen säte man nach Arten getrennt flach ein. Für die hier beschriebene Nachlaufbehandlung zog man die Testpflanzen je nach Wuchsform bis zu einer Wuchshöhe von 5 bis 15 cm an. Danach wurden die Wirkstoffe beispielsweise in einer Aufwandmenge von 0,25 kg/ha und 1,0 kg/ha in einem Fall nur 1,0 kg/ha Aktivsubstanz aufgebracht.

Man benutzte dabei Wasser als Verteilungsmittel, worin man die Wirkstoffe suspendiert oder emulgiert mittels fein verteilender Düsen verspritzte.

Als Vergleichsmittel diente der Wirkstoff

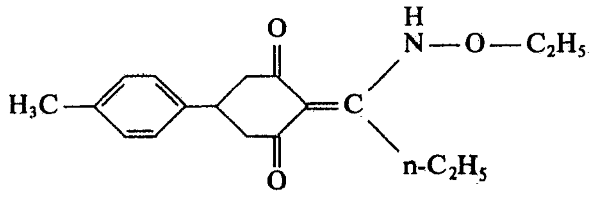

A bekannt aus DE-AS 2 439 104

welcher in der Literatur als besonders selektiv und wirksam herausgestellt wird.

Die Durchführung der Versuche erfolgte im Gewächshaus. Die Versuchsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Aufgang und 100 kein Aufgang bzw. völlige Zerstörung zumindest der oberirdischen Sproßteile.

Die Ergebnisse zeigen, daß die neuen Verbindungen zur selektiven Bekämpfung von unerwünschten Gräsern in Getreide geeignet sind und eine überraschende Verträglichkeit zeigen. Allerdings scheinen zwischen einzelnen Getreidesorten Unterschiede in der Verträglichkeit zu bestehen. Bei der Prüfung auf herbizide Wirksamkeit bei Nachauflaufanwendung mit 0,25 und 1,0 kg/ha Wirkstoff im Gewächshaus zeigt die neue Verbindung Nr. 3 eine nur geringfügig schwächere herbizide Wirkung als das Vergleichsmittel A, dafür jedoch eine wesentlich bessere Verträglichkeit für die Getreidearten Gerste und Weizen.

Ebenso hatte der Wirkstoff Nr. 1 bei brauchbarer Wirkung gegen unerwünschte Gräser eine bessere Verträglichkeit für Getreide als das Vergleichsmittel A.

Ferner zeigte die neue Verbindung Nr. 2 mit 1,0 kg/ha im Nachauflaufverfahren im Gewächshaus bei akzeptabler Wirkung gegen Alopecurus myosuroides noch eine wesentliche bessere Verträglichkeit für Gerste und Weizen als das Vergleichsmittel A.

In weiteren Gewächshausversuchen, welche nach den beschriebenen Methoden durchgeführt wurden, zeigte die Verbindung Nr. 3 bei Nachauflaufanwendung von 0,5 kg Wirkstoff/ha zwar wiederum eine leicht schwächere herbizide Aktivität gegen unerwünschte Gräser als das bekannte Vergleichsmittel A. Die Verträglichkeit für die Getreideart Roggen ist jedoch weitaus besser und macht Verbindung Nr. 3 in seiner Verwendbarkeit dem Vergleichsmittel A überlegen.

Alle hier aufgeführten neuen Verbindungen haben auch eine nennenswerte herbizide Aktivität bei Vorauflaufanwendung.

Die neuen Verbindungen sind außer in Getreidearten auch in breitblättrigen Kulturen selektiv herbizid wirksam.

Sind gewisse Kulturpflanzen gegenüber den Wirkstoffen weniger tolerant, so können auch Ausbringungstechniken angewandt werden, bei welchen die herbiziden Mittel mit Hilfe der Spritzgeräte so geleitet werden, daß die Blätter empfindlicher Kulturpflanzen nach Möglichkeit nicht getroffen werden, während sie auf die Blätter darunter wachsender unerwünschter Pflanzen oder die unbedeckte Bodenfläche gelangen (post directed, lay-by). In Anbetracht der guten Verträglichkeit und der Vielseitigkeit der Applikationsmethoden können die erfindungsgemäßen Herbizide oder diese enthaltende Mittel noch in einer weiteren großen Zahl von Kulturpflanzen zur Beseitigung unerwünschten Pflanzenwuchses eingesetzt werden.

In Betracht kommen folgende Kulturen:

| Botanischer Name | Deutscher Name | Englischer Name |
| --- | --- | --- |
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Aventa sativa | Hafer | oats |
| Beta vulgaris spp. altissima | Zuckerrübe | sugarbeets |
| Beta vulgaris spp. rapa | Futterrübe | fooder beets |
| Beta vulgaris spp. esculenta | Rote Rübe | table beets, red beets |
| Brassica napus var. napus | Raps | rape seed |
| Brassica napus var. naprobrassica | Kohlrübe | |
| Brassica napus var. rapa | Weiße Rübe | turnips |
| Brassica rapa var. silvestris | Rübsen | |
| Camellia sinensis | Teestrauch | tea plants |
| Carthamus tinctorius | Saflor-Färbedistel | safflower |
| Carya illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |

| Botanischer Name | Deutscher Name | Englischer Name |
|---|---|---|
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut trees |
| Lactuca sativa | Kopfsalat | lettuce |
| Lens culinaris | Linse | lentils |
| Linum usitatissium | Faserlein | flax |
| Lycopersiocon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- u. Mehlbanane | banana plants |
| Nicotiana tabacum (N. rustica) | Tabak | tabacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Urdbohne | mungbeans |
| Phaseolus vulgaris | Buschbohnen | snapbeans, green beens, dry beans |
| Pennisetum glaucum | Perl- oder Rohrkolbenhirse | |
| Petroselinim crispum spp. tuberosum | Wurzelpetersilie | parsley |
| Picea abies | Rotfichte | Norway spruce |
| Abies alba | Weißtanne | fire |
| Pinus spp. | Kiefer | pine trees |

| Botanischer Name | Deutscher Name | Englischer Name |
|---|---|---|
| Pisum sativum | Gartenerbse | English peas |
| Prunus avium | Süßkirsche | cherry trees |
| Prunus domestica | Pflaume | plum trees |
| Prunus dulcis | Mandelbaum | almond trees |
| Prunus persica | Pfirsich | peach trees |
| Prunus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potato |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium carymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn, maize |

**Patentansprüche für die Vertragsstaaten BE, CH, DE, FR, GB, IT, LI, LU, NL, SE**

1. Verbindungen der allgemeinen Formel

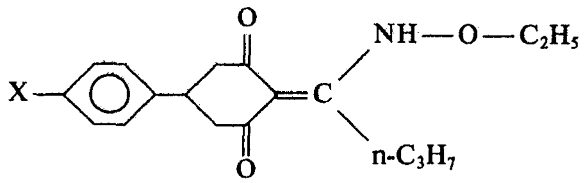

in der
X Fluor, Chlor, Ethyl oder n-Propyl bedeutet und die Salze dieser Verbindungen.

2. Herbizid enthaltend ein 5-Aryl-cyclohexan-1,3-dion-derivat der Formel

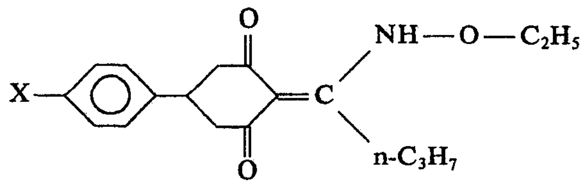

in der
X Fluor, Chlor, Ethyl oder n-Propyl bedeutet und die Salze dieser Verbindungen.

3. Herbizid enthaltend einen festen oder flüssigen Trägerstoff und ein 5-Aryl-cyclohexan-1,3-dion-derivat der Formel

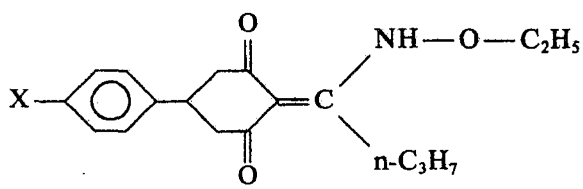

in der
X Fluor, Chlor, Ethyl oder n-Propyl bedeutet und die Salze dieser Verbindungen.

4. Verfahren zur Herstellung eines Herbizids, dadurch gekennzeichnet, daß man einen festen oder flüssigen Trägerstoff vermischt mit einem 5-Aryl-cyclohexan-1,3-dion-derivat der Formel

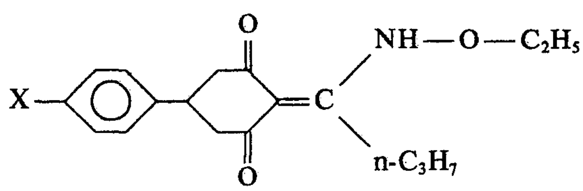

in der
X Fluor, Chlor, Ethyl oder n-Propyl bedeutet und die Salze dieser Verbindungen.

5. Verfahren zur Bekämpfung von unerwünschten Pflanzen, dadurch gekennzeichnet, daß man die Pflanzen oder den Boden behandelt mit einem 5-Aryl-cyclohexan-1,3-dion-derivat der Formel

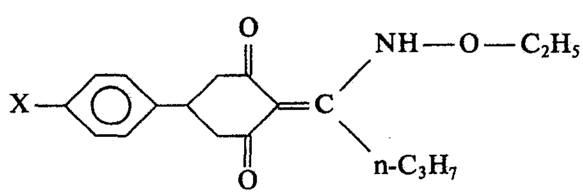

in der
X Fluor, Chlor, Ethyl oder n-Propyl bedeutet und die Salze dieser Verbindungen.

6. Verfahren zur Herstellung eines 5-Aryl-cyclohexan-1,3-dion-derivats der Formel

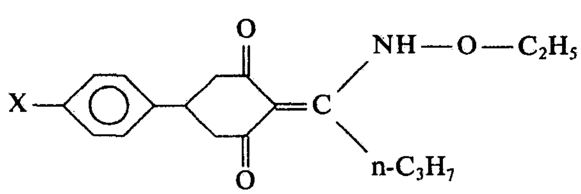

in der
X Fluor, Chlor, Ethyl oder n-Propyl bedeutet und die Salze dieser Verbindungen, dadurch gekennzeichnet, daß man eine Verbindung der Formel

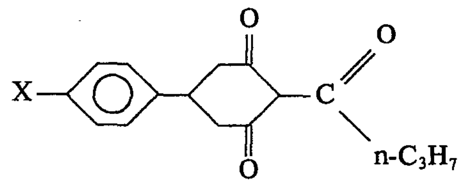

in der X die oben genannte Bedeutung hat, mit einer Ammoniumverbindung der Formel

$C_2H_5-O-NH_3Y$,

in der Y ein Anion bedeutet, in Gegenwart eines Lösungsmittels bei Temperaturen von 0°C bis zum Siedepunkt des Gemisches und in Gegenwart von Basen umsetzt.

7. 5-Aryl-cyclohexan-1,3-dion-derivat, ausgewählt aus der Gruppe, bestehend aus
2-(Ethoxyaminobutyliden)-5-(4-fluorphenyl)-cyclohexan-1,3-dion,
2-(Ethoxyaminobutyliden)-5-(4-chlorphenyl)-cyclohexan-1,3-dion,
2-(Ethoxyaminobutyliden)-5-(4-ethylphenyl)-cyclohexan-1,3-dion und
2-(Ethoxyaminobutyliden)-5-(4-n-propylphenyl)-cyclohexan-1,3-dion.

8. Herbizid enthaltend ein 5-Aryl-cyclohexan-1,3-dion-derivat, ausgewählt aus der Gruppe, bestehend aus
2-(Ethoxyaminobutyliden)-5-(4-fluorphenyl)-cyclohexan-1,3-dion,
2-(Ethoxyaminobutyliden)-5-(4-chlorphenyl)-cyclohexan-1,3-dion,
2-(Ethoxyaminobutyliden)-5-(4-ethylphenyl)-cyclohexan-1,3-dion und
2-(Ethoxyaminobutyliden)-5-(4-n-propylphenyl)-cyclohexan-1,3-dion.

**Patentansprüche für den Vertragsstaat AT**

1. Herbizid enthaltend ein 5-Aryl-cyclohexan-1,3-dion-derivat der Formel

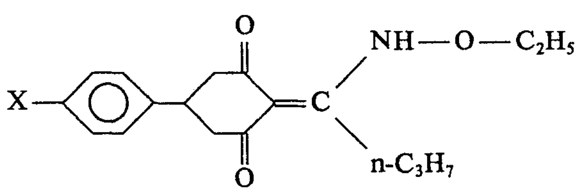

in der
X Fluor, Chlor, Ethyl oder n-Propyl bedeutet und die Salze dieser Verbindungen.

2. Herbizid enthaltend einen festen oder flüssigen Trägerstoff und ein 5-Aryl-cyclohexan-1,3-dion-derivat der Formel

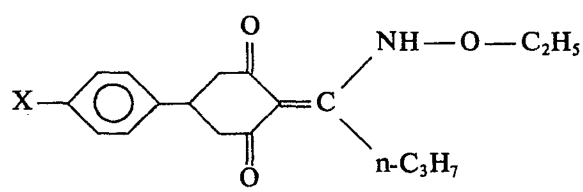

in der
X Fluor, Chlor, Ethyl oder n-Propyl bedeutet und die Salze dieser Verbindungen.

3. Verfahren zur Herstellung eines Herbizides, dadurch gekennzeichnet, daß man einen festen oder flüssigen Trägerstoff vermischt mit einem 5-Aryl-cyclohexan-1,3-dion-derivat der Formel

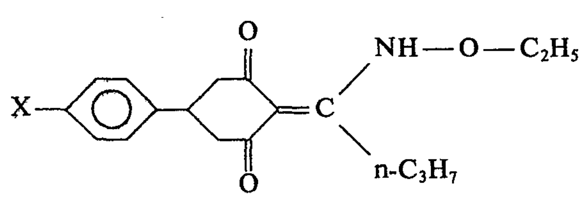

in der
X Fluor, Chlor, Ethyl oder n-Propyl bedeutet und die Salze dieser Verbindungen.

4. Verfahren zur Bekämpfung von unerwünschten Pflanzen, dadurch gekennzeichnet, daß man die Pflanzen oder den Boden behandelt mit einem 5-Aryl-cyclohexan-1,3-dion-derivat der Formel

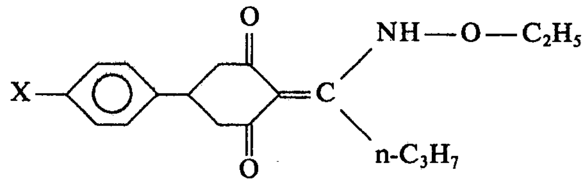

in der
X Fluor, Chlor, Ethyl oder n-Propyl bedeutet und die Salze dieser Verbindungen.

5. Verfahren zur Herstellung eines 5-Aryl-cyclohexan-1,3-dion-derivats der Formel

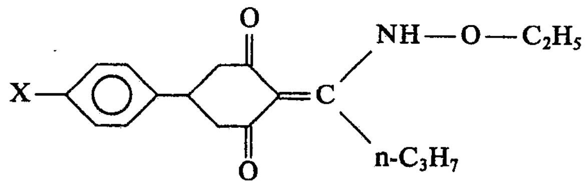

in der
X Fluor, Chlor, Ethyl oder n-Propyl bedeutet und die Salze dieser Verbindungen, dadurch gekennzeichnet, daß man eine Verbindung der Formel

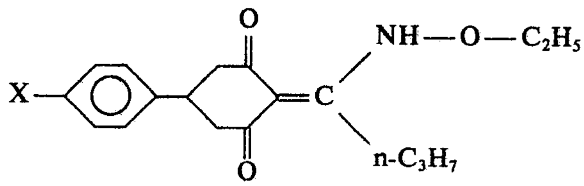

in der X die oben genannte Bedeutung hat, mit einer Ammoniumverbindung der Formel

$C_2H_5-O-NH_3Y$,

in der Y ein Anion bedeutet, in Gegenwart eines Lösungsmittels bei Temperaturen von 0°C bis zum Siedepunkt des Gemisches und in Gegenwart von Basen umsetzt.

6. Herbizid enthaltend ein 5-Aryl-cyclohexan-1,3-dion-derivat, ausgewählt aus der Gruppe, bestehend aus
2-(Ethoxyaminobutyliden)-5-(4-fluorphenyl)-cyclohexan-1,3-dion,
2-(Ethoxyaminobutyliden)-5-(4-chlorphenyl)-cyclohexan-1,3-dion,
2-(Ethoxyaminobutyliden)-5-(4-ethylphenyl)-cyclohexan-1,3-dion und
2-(Ethoxyaminobutyliden)-5-(4-n-propylphenyl)-cyclohexan-1,3-dion.

**Claims for the Contracting States BE, CH, DE, FR, GB, IT, LI,LU, NL, SE**

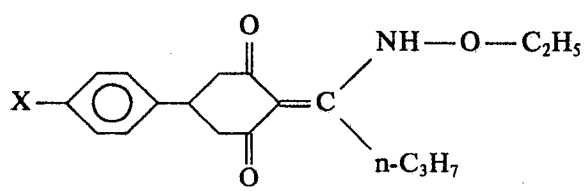

where X is fluorine, chlorine, ethyl or n-propyl, and the salts thereof.

2. A herbicide containing a 5-aryl-cyclohexane-1,3-dione derivative of the formula

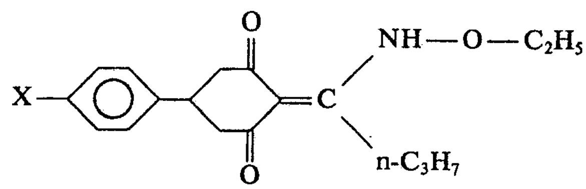

where X is fluorine, chlorine, ethyl or n-propyl, or a salt thereof.

3. A herbicide containing a solid or liquid carrier and a 5-aryl-cyclohexane-1,3-dione derivative of the formula

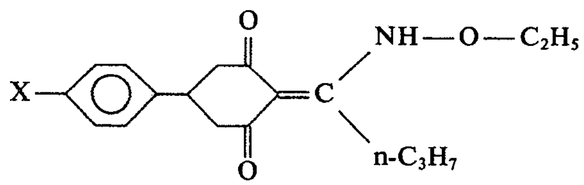

where X is fluorine, chlorine, ethyl or n-propyl, or a salt thereof.

4. A process for the production of a herbicide, wherein a solid or liquid carrier is mixed with a 5-aryl-cyclohexane-1,3-dione derivative of the formula

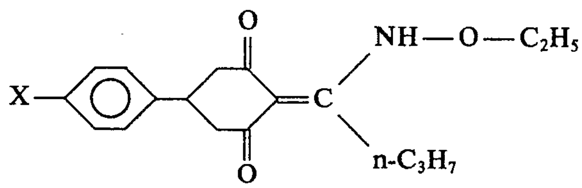

where X is fluorine, chlorine, ethyl or n-propyl, or a salt thereof.

5. A process for combating unwanted plants, wherein the plants or the soil are treated with a 5-aryl-cyclohexane-1,3-dione derivative of the formula

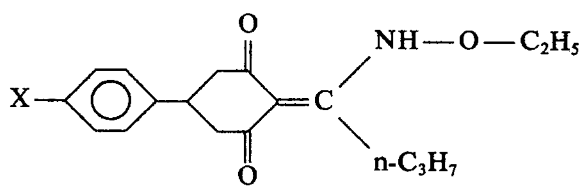

where X is fluorine, chlorine, ethyl or n-propyl, or a salt thereof.

6. A process for the preparation of a 5-aryl-cyclohexane-1,3-dione derivative of the formula

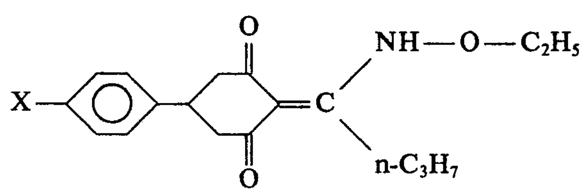

where X is fluorine, chlorine, ethyl or n-propyl, or a salt thereof, wherein a compound of the formula

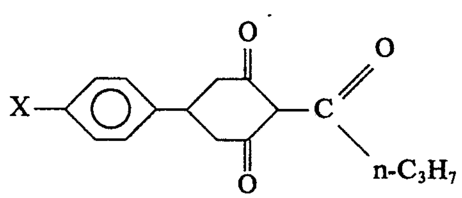

where X has the above meanings, is reacted with an ammonium compound of the formula

$C_2H_5-O-NH_3Y$,

where Y is an anion, in the presence of a solvent at a temperature of from 0° C to the boiling point of the mixture, and in the presence of a base.

7. A 5-aryl-cyclohexane-1,3-dione derivative selected from the group consisting of
2-(ethoxyaminobutylidene)-5-(4-fluorophenyl)-cyclohexane-1,3-dione,
2-(ethoxyaminobutylidene)-5-(4-chlorophenyl)-cyclohexane-1,3-dione,
2-(ethoxyaminobutylidene)-5-(4-ethylphenyl)-cyclohexane-1,3-dione, and
2-(ethoxyaminobutylidene)-5-(4-n-propylphenyl)-cyclohexane-1,3-dione.

8. A herbicide containing a 5-aryl-cyclohexane-1,3-dione derivative selected from the group consisting of

2-(ethoxyaminobutylidene)-5-(4-fluorophenyl)-cyclohexane-1,3-dione,
2-(ethoxyaminobutylidene)-5-(4-chlorophenyl)-cyclohexane-1,3-dione,
2-(ethoxyaminobutylidene)-5-(4-ethylphenyl)-cyclohexane-1,3-dione, and
2-(ethoxyaminobutylidene)-5-(4-n-propylphenyl)-cyclohexane-1,3-dione.

**Claims for the Contracting State AT**

1. A herbicide containing a 5-aryl-cyclohexane-1,3-dione derivative of the formula

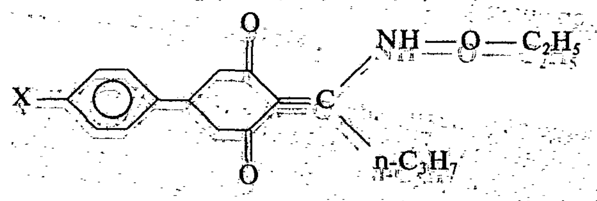

where X is fluorine, chlorine, ethyl or n-propyl, or a salt thereof.

2. A herbicide containing a solid or liquid carrier and a 5-aryl-cyclohexane-1,3-dione derivative of the formula

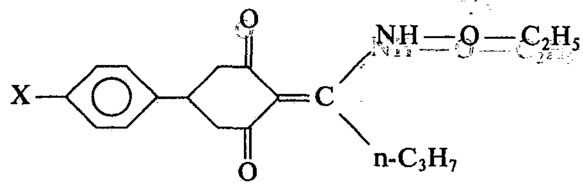

where X is fluorine, chlorine, ethyl or n-propyl, or a salt thereof.

3. A process for the production of a herbicide, wherein a solid or liquid carrier is mixed with a 5-aryl-cyclohexane-1,3-dione derivative of the formula

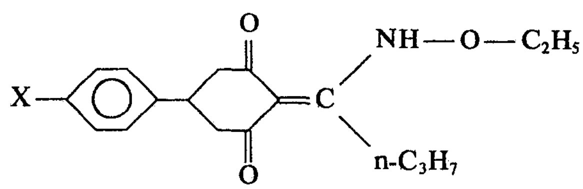

where X is fluorine, chlorine, ethyl or n-propyl, or a salt thereof.

4. A process for combating unwanted plants, wherein the plants or the soil are treated with a 5-aryl-cyclohexane-1,3-dione derivative of the formula

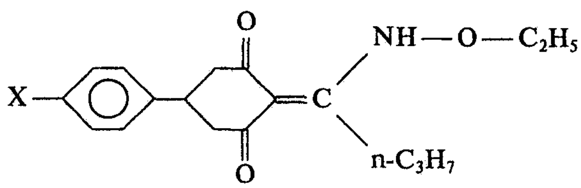

where X is fluorine, chlorine, ethyl or n-propyl, or a salt thereof.

5. A process for the preparation of a 5-aryl-cyclohexane-1,3-dione derivative of the formula

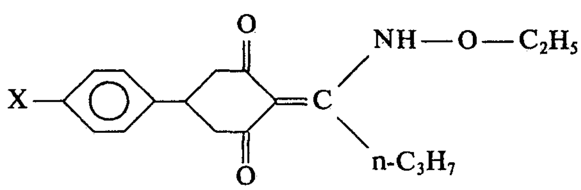

where X is fluorine, chlorine, ethyl or n-propyl, or a salt thereof, wherein a compound of the formula

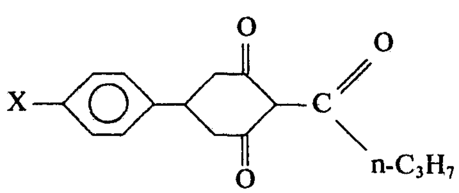

where X has the above meanings, is reacted with an ammonium compound of the formula

$C_2H_5-O-NH_3Y$,

where Y is an anion, in the presence of a solvent at a temperature of from 0°C to the boiling point of the mixture, and in the presence of a base.

6. A herbicide containing a 5-aryl-cyclohexane-1,3-dione derivative selected from the group consisting of
2-(ethoxyaminobutylidene)-5-(4-fluorophenyl)-cyclohexane-1,3-dione,
2-(ethoxyaminobutylidene)-5-(4-chlorophenyl)-cyclohexane-1,3-dione,
2-(ethoxyaminobutylidene)-5-(4-ethylphenyl)-cyclohexane-1,3-dione, and
2-(ethoxyaminobutylidene)-5-(4-n-propylphenyl)-cyclohexane-1,3-dione.

**Revendications pour les Etats contractants BE, CH, DE, FR, GB IT, LI, LU, NL, SE**

1. Composés de formule générale

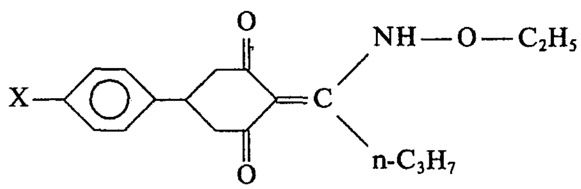

dans laquelle X représente fluor, chlore, éthyle ou n-propyle et les sels de ces composés.

2. Herbicide contenant un dérivé de 5-aryl-cyclohexan-1,3-dione de formule

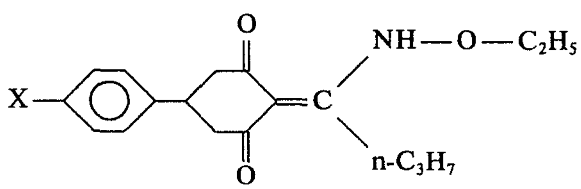

dans laquelle X représente fluor, chlore, éthyle ou n-propyle et les sels de ces composés.

3. Herbicide contenant un support solide ou liquide et un dérivé de 5-aryl-cyclohexan-1,3-dione de formule

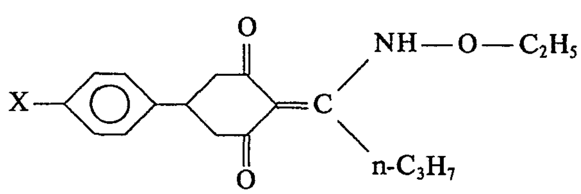

dans laquelle X représente fluor, chlore, éthyle ou n-propyle et les sels de ces composés.

4. Procédé de préparation d'un herbicide, caractérisé par le fait qu'on mélange un support solide en liquide avec un dérivé de 5-arylcyclohexan-1,3-dione de formule

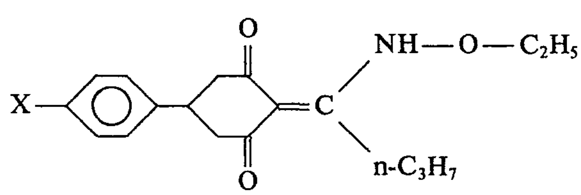

dans laquelle X représente fluor, chlore, éthyle ou n-propyle et les sels de ces composés.

5. Procédé de lutte contre les plantes indésirables, caractérisé par le fait que l'on traite les plantes ou le sol avec un dérivé de 5-aryl-cyclohexan-1,3-dione de formule

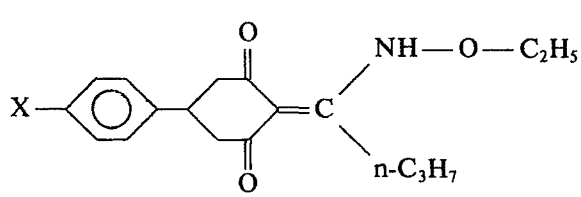

dans laquelle X représente fluor, chlore, éthyle ou n-propyle et les selsde ces composés.

6. Procédé de préparation d'un dérivé de 5-aryl-cyclohexan-1,3-dione de formule

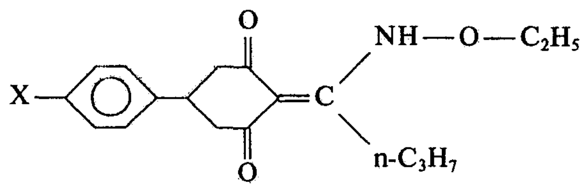

dans laquelle X représente fluor, chlore, éthyle ou n-propyle et les sels de ces composés, caractérisé par le fait qu'on fait réagir, en présence d'un solvant, à des températures allant de 0°C au point d'ébullition du mélange et en présence de bases, un composé de formule

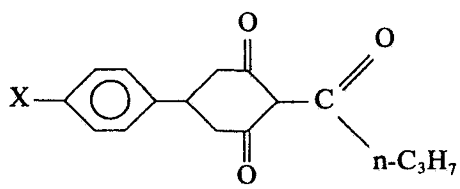

dans laquelle X a la signification donnée plus haut, avec un dérivé d'ammonium de formule

$C_2H_5-O-NH_3Y$

dans laquelle Y est un anion.

7. Dérivé de 5-aryl-cyclohexan-1,3-dione choisi dans le groupe constitué de
2-(éthoxyaminobutyliden)-5-(4-fluorophényl)-cyclohexan-1,3-dione,
2-(éthoxyaminobutyliden)-5-(4-chlorophényl)-cyclohexan-1,3-dione,
2-(éthoxyaminobutyliden)-5-(4-éthylphényl)-cyclohexan-1,3-dione, et
2-(éthoxyaminobutyliden)-5-(4-n-propylphényl)-cyclohexan-1,3-dione.

8. Herbicide contenant un dérivé de 5-aryl-cyclohexan-1,3-dione, choisi dans le groupe constitué de
2-(éthoxyaminobutyliden)-5-(4-fluorophényl)-cyclohexan-1,3-dione,
2-(éthoxyaminobutyliden)-5-(4-chlorophényl)-cyclohexan-1,3-dione,
2-(éthoxyaminobutyliden)-5-(4-éthylphényl)-cyclohexan-1,3-dione, et
2-(éthoxyaminobutyliden)-5-(4-n-propylphényl)-cyclohexan-1,3-dione.

**Revendications pour l'Etat contractant AT**

1. Herbicide contenant un dérivé de 5-aryl-cyclohexan-1,3-dione de formule

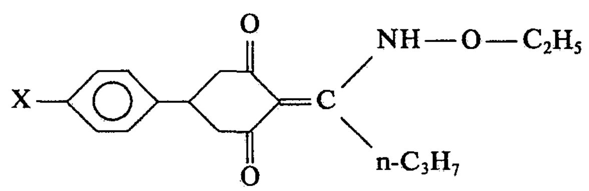

dans laquelle X représente fluor, chlore, éthyle ou n-propyle et les sels de ces composés.

2. Herbicide contenant un support solide en liquide et un dérivé de 5-aryl-cyclohexan-1,3-dione de formule

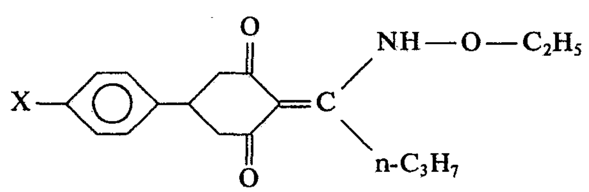

dans laquelle X représente fluor, chlore, éthyle ou n-propyle et les sels de ces composés.

3. Procédé de préparation d'un herbicide, caractérisé par le fait qu'on mélange un support solide en liquide avec un dérivé de 5-aryl-cyclohexan-1,3-dione de formule

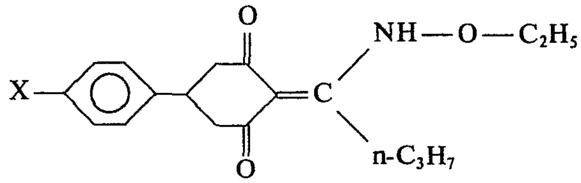

dans laquelle X représente fluor, chlore, éthyle ou n-propyle et les sels de ces composés.

4. Procédé de lutte contre les plantes indésirables, caractérisé par le fait que l'on traite les plantes ou le sol avec un dérivé de 5-aryl-cyclohexan-1,3-dione de formule

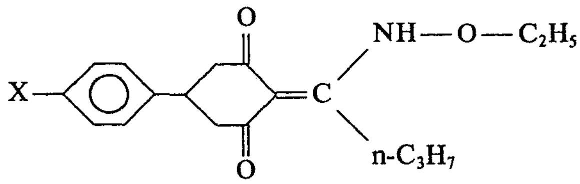

dans laquelle X représente fluor, chlore, éthyle ou n-propyle et les sels de ces composés.

5. Procédé de préparation d'un dérivé de 5-aryl-cyclohexan-1,3-dione de formule

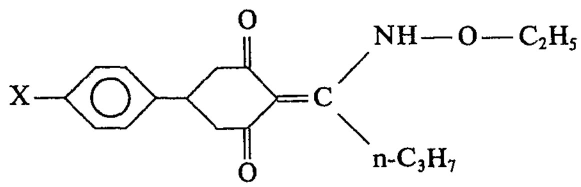

dans laquelle X représente fluor, chlore, éthyle ou n-propyle et les sels de ces composés, caractérisé par le fait qu'on fait réagir, en présence d'un solvant à des températures allant de 0°C au point d'ébullition du mélange et en présence de un composé de formule

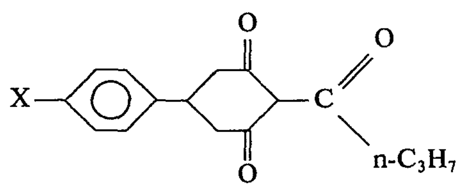

dans laquelle X a la signification donnée plus haut, avec un dérivé d'ammonium de formule

$$C_2H_5-O-NH_3Y$$

dans laquelle Y est un anion.

6. Herbicide contenant un dérivé de 5-arylcyclohexan-1,3-dione, choisi dans le groupe constitué de
2-(éthoxyaminobutyliden)-5-(4-fluoryphényl)-cyclohexan-1,3-dione,
2-(éthoxyaminobutyliden)-5-(4-chlorphényl)-cyclohexan-1,3-dione,
2-(éthoxyaminobutyliden)-5-(4-éthylphényl)-cyclohexan-1,3-dione,et
2-(éthoxyaminobutyliden)-5-(4-n-propylphényl)-cyclohexan-1,3-dione.